Europäisches Patentamt

European Patent Office

Office européen des brevets

(11) Numéro de publication: **0 346 248**
**A1**

## (12) DEMANDE DE BREVET EUROPEEN

(21) Numéro de dépôt: **89420186.2**

(22) Date de dépôt: **30.05.89**

(51) Int. Cl.⁴: **B 60 P 7/16**

(30) Priorité: **08.06.88 FR 8807884**

(43) Date de publication de la demande:
**13.12.89 Bulletin 89/50**

(84) Etats contractants désignés:
**AT BE CH DE ES FR GB GR IT LI LU NL SE**

(71) Demandeur: **Ilic, Zoran**
**5, rue Salvador Allende**
**F-69600 Oullins (FR)**

(72) Inventeur: **Ilic, Zoran**
**5, rue Salvador Allende**
**F-69600 Oullins (FR)**

(74) Mandataire: **Wind, Jacques**
**CABINET JACQUES WIND 4, Quai des Etroits**
**F-69005 Lyons (FR)**

(54) **Dispositif élastique de calage ou de support.**

(57) Dispositif élastique de calage ou de support, utilisable en particulier pour le calage et/ou le support élastique d'objets pendant leur transport.

Il comprend au moins un élément élastique (1) composé de deux plaques mobiles et parallèles (2, 3), avec ressorts de répulsion (2, 3) et moyens orthogonaux de guidage (9, 10, 11) à plaques articulées qui, tout en permettant aux plaques maîtresses (2, 3) de se rapprocher et de s'écarter l'une de l'autre, leur interdit substantiellement tout déplacement latéral relatif.

Fig.1

EP 0 346 248 A1

**Description**

## DISPOSITIF ELASTIQUE DE CALAGE OU DE SUPPORT

La présente invention se rapporte à un dispositif élastique de calage ou de support, un tel dispositif étant utilisable dans un grand nombre d'applications, et en particulier pour le calage et/ou le support élastique d'objets pendant leur transport.

Le calage d'objets, en particulier d'objets fragiles, dans un compartiment de véhicule ou dans un conteneur ou wagon de transport, ou autre, est un problème qui n'est pas à l'heure actuelle résolu de manière satisfaisante, et en tous cas de manière commode, suffisamment efficace, peu onéreuse, et universelle.

C'est ainsi que pour caler des objets dans un coffre de véhicule automobile, il a été prévu, par exemple selon le document FR-A-2.518.469, des moyens de blocage mécanique qui, s'ils ont l'avantage d'être réglables, présentent l'inconvénient de devoir être fixés dans le coffre du véhicule automobile, ce qui nécessite des perçages et boulonnages, et qui sont en outre de réalisation assez complexe et de spécificité telle qu'ils ne peuvent répondre à tous les cas de figure.

Dans un même ordre d'idées, il est connu de caler, dans leur caisse de conditionnement, des appareils fragiles, tels que des téléviseurs, à l'aide de cales en polystyrène ou matériau analogue, qui sont spécialement façonnées à cet effet. Il s'agit là d'une solution astreignante, puisqu'elle oblige à concevoir un jeu de cales spécifiques à chaque appareil et, en outre, l'élasticité des matériaux de calage utilisés peut quelquefois être considérée comme insuffisante dans certaines applications.

L'utilisation pure et simple de mousse élastique pour caler des objets dans un compartiment de conditionnement ou de transport n'est pas suffisamment efficace, car le calage alors obtenu est insuffisant du fait qu'il n'empêche pas les déplacements en tous sens de ces objets, ces déplacements erratiques risquant finalement de les détériorer en raison en particulier des vibrations engendrées au cours du transport, en particulier lors d'un transport sur rail ou sur route.

Dans le tout autre domaine qui est celui de la literie, il existe en matière de matelas à souplesse élastique, soit des matelas en mousse naturelle ou artificielle, soit des matelas dits à ressorts. Ces matelas ont pour inconvénient d'être non seulement susceptibles d'effectuer des déplacements élastiques dans le sens orthogonal au plan du matelas, c'est à dire dans le sens vertical, ce qui est bien l'effet souhaité, mais encore de pouvoir effectuer de sensibles déplacements latéraux, c'est à dire dans le sens horizontal, ce qui est plutôt désagréable aux usagers.

Il en est exactement de même des tapis élastiques connus qui, outre l'élasticité verticale particulièrement souhaitée pour le confort des usagers qui les piétinent, présentent en outre une élasticité horizontale à caractère néfaste et même dangereux.

L'invention vise à remédier à ces inconvénients. Elle se rapporte à cet effet à un dispositif de calage ou de support qui est constitué d'au moins un élément élastique, cet élément comprenant deux faces en regard, ces deux faces étant mobiles l'une par rapport à l'autre et étant constituées d'un matériau rigide ou semi-rigide et étant aptes à se rapprocher ou à s'éloigner élastiquement l'une de l'autre sous l'effet de moyens de répulsion élastique prévus à cet effet dans l'espace qui les sépare, des moyens mécaniques de guidage étant en outre prévus entre ces deux faces mobiles pour s'opposer à tout déplacement latéral relatif substantiel de celles-ci. Ces moyens mécaniques de guidage sont constitués par un ensemble d'au moins deux organes de guidage sensiblement orthogonaux l'un par rapport à l'autre, chacun de ces organes étant lui-même composé d'au moins deux plaques rigides qui sont d'une part articulées l'une par rapport à l'autre sur un côté commun, et qui sont d'autre part chacune articulées respectivement sur une des deux faces mobiles en regard précitées par leur côté respectivement parallèle et opposé au côté précité d'articulation de ces deux plaques l'une par rapport à l'autre.

De toute façon, l'invention sera bien comprise, et ses avantages et autres caractéristiques ressortiront, lors de la description suivante de quelques exemples non limitatifs de réalisation, en référence au dessin schématique annexe dans lequel :

- Figure 1 est une vue perspective éclatée d'un élément élastique de calage ou de support ;
- Figure 2 montre ce même élément entièrement monté, avec accessoire additionnel de pré-tension présenté séparément ;
- Figure 3 montre cet élément, en coupe selon III-III de figure 2 et posé sur le sol ;
- Figure 4 est une vue similaire à la figure 3, avec cet élément écrasé au maximum ;
- Figure 5 montre de la même façon une variante de l'élément selon les figures 1 à 4, avec des moyens de pré-tension ainsi que des moyens d'accouplement à d'autres éléments identiques ;
- Figure 6 est une vue perspective d'un organe d'accouplement apparaissant sur la figure 5 ;
- Figure 7 est une vue perspective avec coupe transversale d'une portion de cale pour coffre d'automobile qui constitue une variante spécifique de l'élément selon les figures 1 à 4 ;
- Figure 8 montre de la même façon la cale de la figure 7, écrasée au maximum ; et
- Figure 9 est une vue de dessus très simplifiée d'un matelas ou tapis réalisé au moyen d'un damier d'éléments élastiques conformes à l'invention.

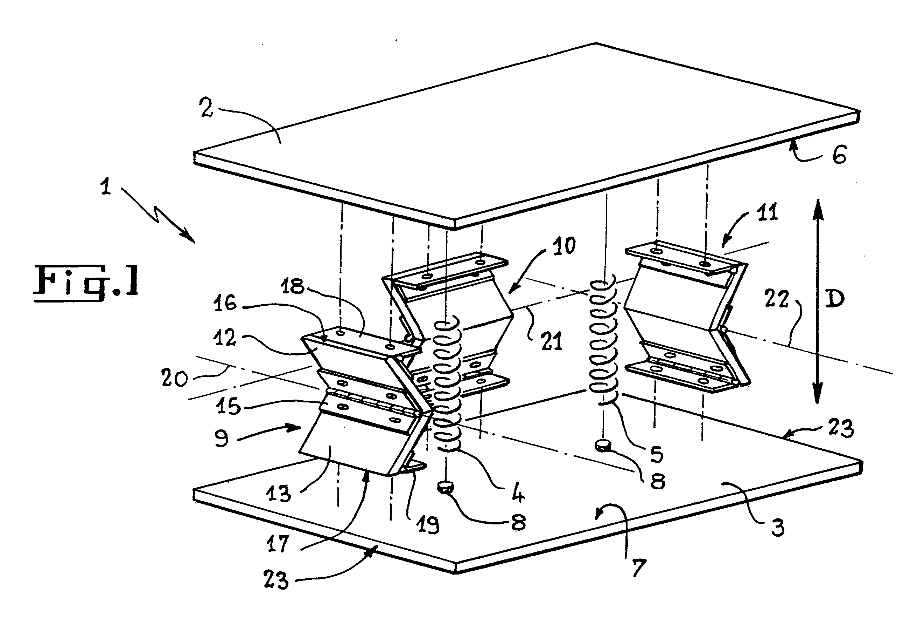

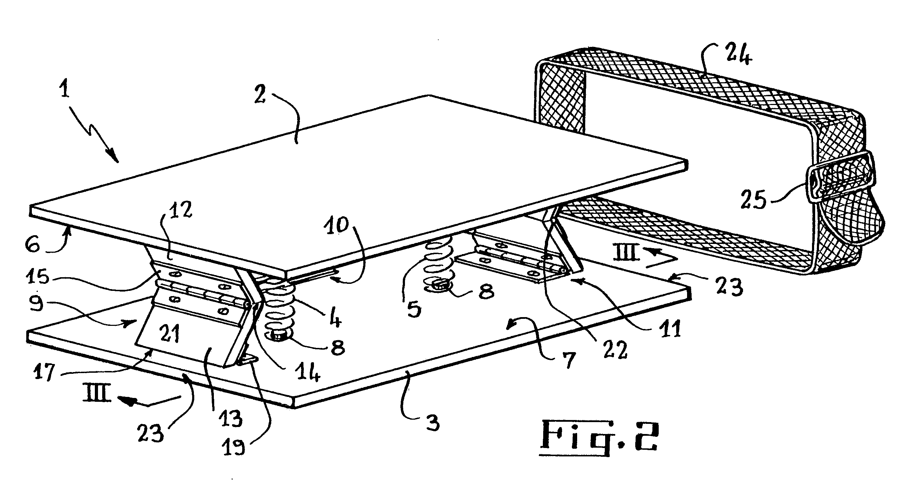

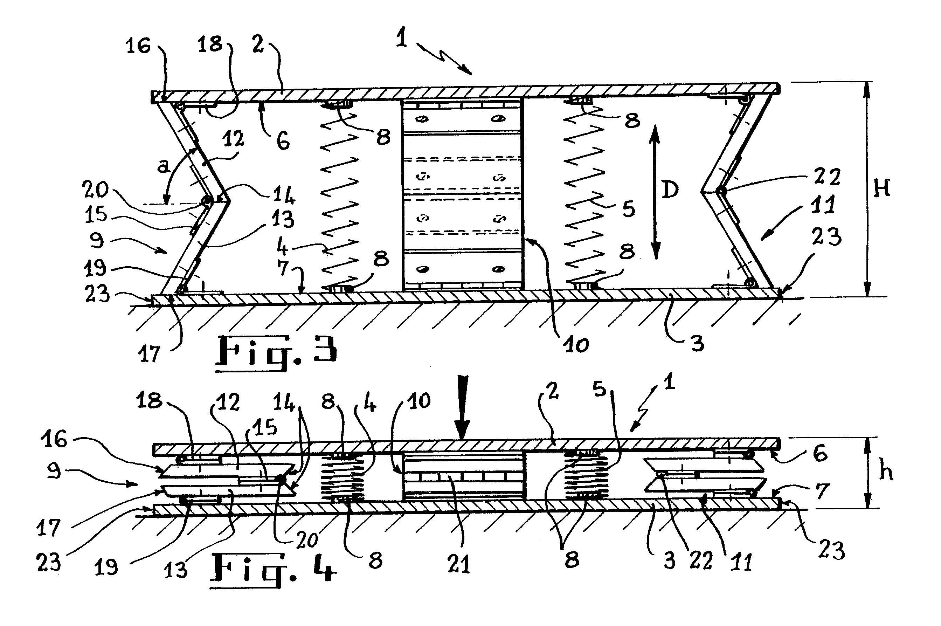

En se référant tout d'abord aux figures 1 à 4, cet élément élastique de calage ou de support 1 a une allure générale de parallélépipéde rectangle et se compose :
- de deux plaques rectangulaires rigides 2, 3 , en matière plastique par exemple, ces deux plaques étant en regard et parallèles l'une à l'autre ;
- de deux ressorts hélicoïdaux 4, 5 de répulsion élastique qui, prenant appui sur les surfaces en regard 6, 7 des plaques 2, 3 et étant maintenus perpendiculaires à celles-ci par des tétons 8, tendent à écarter ces plaques l'une de l'autre ; et
- de trois organes articulés de guidage 9, 10, 11 qui seront décrits ci-dessous, et qui ont pour rôle de s'opposer à tout déplacement latéral relatif substantiel des plaques 2, 3 l'une par rapport à l'autre, et donc de n'autoriser pratiquement qu'un débattement de celles-ci dans le sens orthogonal à leur plan, aux jeux mécaniques transversaux près.

Chacun de ces trois organes de guidage, par exemple l'organe 9, se compose de deux plaquettes rigides et rectangulaires 12, 13 qui sont articulées entre elles le long d'un côté commun 14 au moyen d'une charnière rapportée 15. A noter que, le long de ce côté commun 14, les plaques 12, 13 sont taillées en biais, c'est à dire selon un angle "a" inférieur à 90 degrés, de façon à limiter, par appui de ces côtés conjugués l'un sur l'autre, l'ouverture totale de l'organe 9 à une valeur inférieure à 180 degrés.

De la même façon, les côtés 16, 17 des plaquettes 12, 13 qui sont parallèles et donc opposées au côté commun 14, sont articulées sur les faces intérieures 6, 7 des plaques 2, 3 au moyen de charnières rapportées 18, 19.

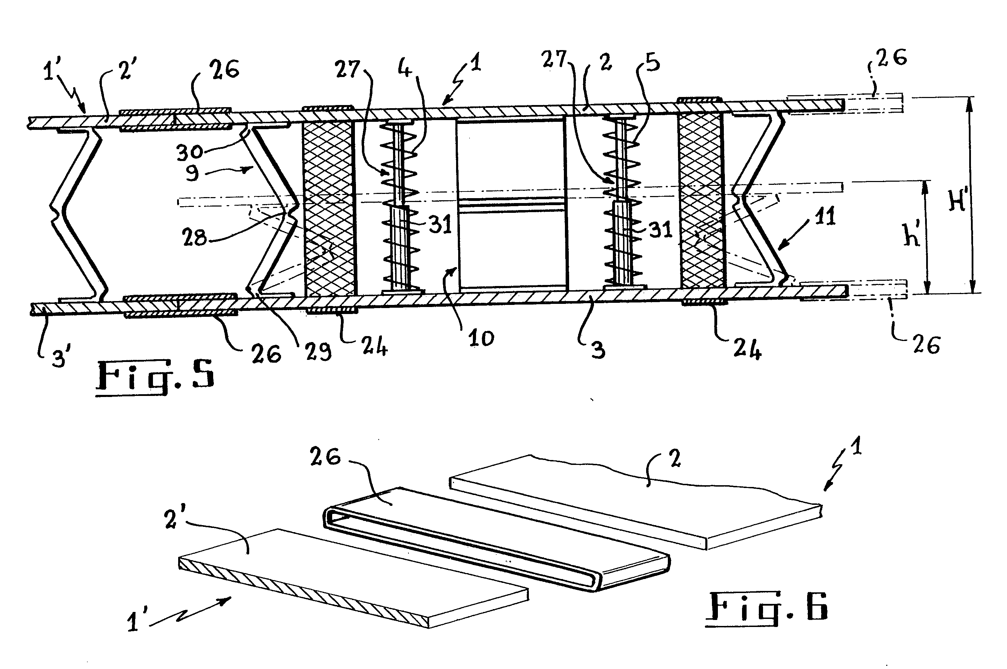

Les axes d'articulation 20 et 21 des organes de guidage 9 et 10 sont sensiblement orthogonaux, et c'est cette orthogonalité qui s'oppose, aux jeux mécaniques latéraux près, à tout déplacement latéral substantiel des plaques 2 et 3 l'une par rapport à l'autre : celles-ci ne peuvent se débattre, contre la force de répulsion des ressorts 4, 5 qu'en s'éloignant ou se rapprochant l'une de l'autre dans la direction D orthogonale à leur plan : en l'absence d'écrasement par une force extérieure selon la direction D, les deux plaques 2 et 3 sont parallèles et écartées l'une de l'autre d'une distance d'écartement maximale H (figure 3), tandis qu'en cas d'écrasement maximal (figure 4) elles sont écartées d'une distance d'écartement minimale h, imposée par l'aplatissement maximal possible des organes de guidage 9 à 11.

A noter que l'axe d'articulation 22 du troisième organe de guidage 11 est parallèle à l'axe d'articulation 20 de l'organe de guidage 9, et donc lui-aussi perpendiculaire à l'axe d'articulation 21 du second organe 10. En réalité, ce troisième organe de guidage 11 qui, à l'instar de l'organe 9, a son axe d'articulation 22 parallèle au petit côté 23 du rectangle que forment chacune des plaques maîtresses 2 et 3, a essentiellement pour rôle d'assurer la bonne tenue mécanique de l'ensemble.

Avantageusement, il peut être joint à l'élément élastique de calage ou de support selon les figures 1 à 4 un dispositif, réglable ou non, de limitation de l'écartement entre les plaques maîtresses 2 et 3 à une valeur d'écartement inférieure à la valeur maximale H précitée. A titre d'exemple nullement limitatif de dispositif de limitation d'écartement, il a été dessiné sur la figure 2 une sangle amovible 24 de longueur ajustable par coulissement dans une boucle de réglage et de blocage classique 25 : en serrant plus ou moins cette sangle 24, il est aisément possible, après l'avoir passée autour de la cale élastique 1, d'écraser plus ou moins celle-ci, en réalisant ainsi une pré-tension, pour lui conférer la distance d'écartement (c'est à dire l'épaisseur) voulue et comprise entre H et h. A noter que pour le conditionnement et le transport des cales 1, il sera avantageux de serrer cette sangle 24 au maximum, afin de conférer à cette cale 1 le minimum de volume en l'écrasant au maximum dans la position de la figure 4.

En se reportant maintenant aux figures 5 et 6, il s'agit d'un dispositif élastique de calage ou de support qui comporte plusieurs éléments 1', 1,..., assemblés bout-à-bout au moyen de manchons coulissants d'assemblage 26 qui sont aptes à emprisonner deux plaques supérieures 2, 2' ou inférieures 3, 3' de deux éléments adjacents 1, 1', en les solidarisant ainsi bout-à-bout.

A titre illustratif, des sangles 24 sont prévues sur ce dispositif afin de limiter l'écartement entre plaques 2, 3 à une valeur de pré-tension H'.

En outre, des vérins amortisseurs 27 sont prévus entre les plaques 2, 3, perpendiculairement à celles-ci, afin d'amortir les chocs de compression du dispositif.

Enfin, toujours à titre d'illustration des variantes possibles, les organes 9, 10, 11 sont chacun constitués d'une seule pièce de matière plastique rigide, avec lignes d'écrasement 28, 29, 30 procurant les effets de charnière souhaités.

A noter qu'en raison des vérins-amortisseurs 27, l'écrasement maximal est limité à une hauteur h' imposée par la longueur du corps 31 de ces vérins.

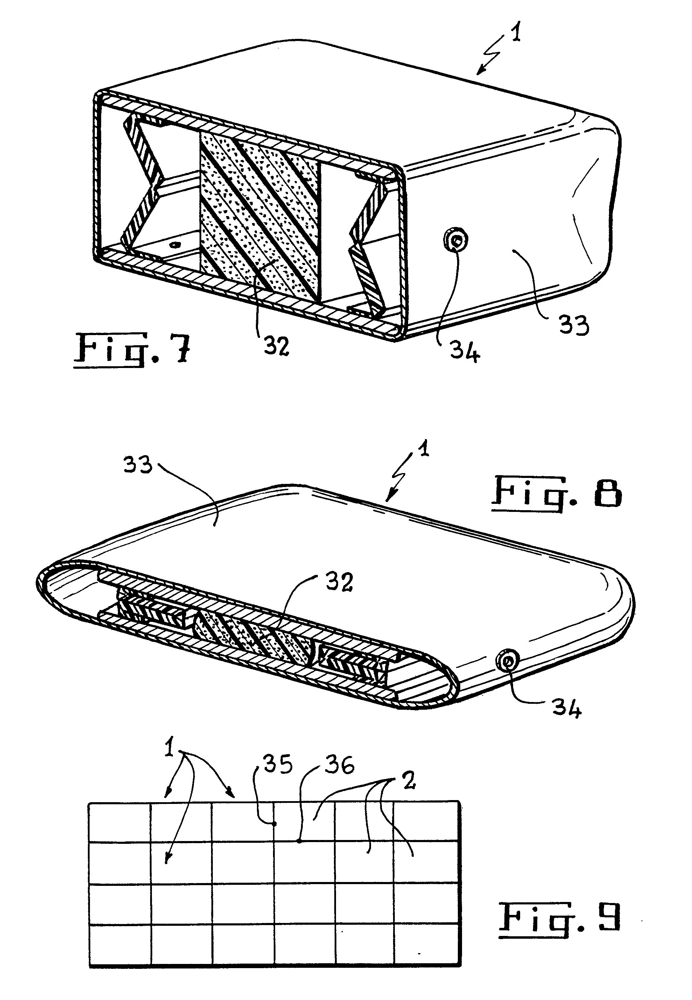

Les figures 7 et 8 montrent une cale 1 pour utilisation "grand public", apte à caler en particulier différents objets et bagages dans un coffre de véhicule automobile.

Cette cale diffère de celle de la figure 5 par le fait, qu'étant de réalisation très simplifiée dans un but évident de limitation de son prix de revient, elle ne comporte pas de vérins d'amortissement, et par le fait que les ressorts hélicoïdaux 4, 5 sont remplacés par un simple bloc 32 en mousse élastique, ou produit élastique analogue tel qu'un élastomère.

En outre, cette cale 1 est entièrement enrobée dans une enveloppe souple 33, avec orifices d'entrée d'air 34, qui est préférentiellement au moins partiellement réalisée en une matière dont la face extérieure est anti-dérapante.

Cette enveloppe 33 sert aussi à limiter l'épaisseur à vide de la cale (figure 7). La figure 8 montre cette cale en position d'écrasement maximal.

Les utilisations des éléments élastiques de calage ou de support 1 sont très variées et, par exemple, il est possible de réaliser, comme le montre la figure 9, un damier d'éléments 1 assemblés par exemple par les côtés 35, 36 de chacune de leurs plaques supérieures 2 précitées, (ou plus avantageusement de leurs plaques inférieures 3), afin de réaliser, selon les dimensions et le nombre d'éléments 1, soit un matelas (matelas de plage ou partie centrale d'un matelas à ressorts), soit un tapis souple.

Comme il va de soi, l'invention n'est pas limitée aux exemples de réalisation qui viennent d'être décrits, mais elle est bien au contraire susceptible d'être réalisée selon de nombreuses autres formes d'éxécution. C'est ainsi par exemple que les faces en regard 2, 3, pourraient ne pas être planes, mais présenter chacune une forme de demi-coque, ou autre. Ces faces pourraient aussi ne pas etre parallèles ce qui peut être avantageux pour le calage, par exemple dans un coffre de véhicule automobile, de mallettes ou de bouteilles de gaz. Elles pourraient être extérieurement constituées, ou revêtues, en totalité ou en partie, d'un matériau anti-dérapant. Elles pourraient etre semi-rigides au lieu d'être rigides. Les organes de guidage pourraient être limités à deux seuls organes orthogonaux tels que 9 et 10. A contrario, leur nombre pourrait être supérieur à trois. Les charnières 15, 18, 19 pourraient être des charnières à effet de ressort ce qui pourrait permettre, dans certains cas, de s'affranchir de prévoir les ressorts 4, 5, ou le bloc de mousse 32. Les moyens de répulsion élastiques peuvent être constitués par un dispositif pneumatique gonflable. Chaque organe de guidage pourrait être composé de trois plaques articulées ou lieu de deux, ou même plus de trois plaques articulées. Chaque cale, par exemple selon les figures 7 et 8 pourrait être au moins partiellement recouverte d'un matériau fluorescent afin de pouvoir en outre servir de balise de sécurité, par exemple en cas de panne du véhicule automobile en pleine nuit, qui peut être soit tenue à la main, soit posée à terre, soit posée sur le véhicule.

**Revendications**

1 - Dispositif élastique de calage ou de support, caractérisé en ce qu'il comporte au moins un élément élastique (1) qui comprend deux faces en regard (2, 3), ces deux faces (2, 3) étant mobiles l'une par rapport à l'autre, étant constituées d'un matériau rigide ou semi-rigide, et étant associées à ces moyens leur permettant de se rapprocher ou de s'éloigner élastiquement l'une de l'autre, ces moyens étant des moyens de répulsion élastique (4, 5, 32) prévus à cet effet dans l'espace compris entre ces deux faces (2, 3), des moyens mécaniques de guidage (9, 10) étant en outre prévus entre ces deux faces (2, 3) pour s'opposer à tout déplacement latéral relatif et substantiel de celles-ci, ces moyens de guidage étant constitués par un ensemble d'au moins deux organes de guidage (9, 10) sensiblement orthogonaux l'un (9) par rapport à l'autre (10), chacun de ces organes (9, 10, 11) étant lui-même composé d'au moins deux plaques rigides (12, 13) qui sont d'une part articulées l'une par rapport à l'autre sur un côté commun (14), et qui sont d'autre part articulées chacune respectivement sur une des deux faces en regard (2, 3) précitées par leur côté (16, 17) respectivement parallèle et opposé au côté commun (14) d'articulation de ces deux plaques (12,n 13) l'une par rapport à l'autre.

2 - Dispositif élastique de calage ou de support selon la revendication 1, caractérisé en ce que des moyens d'amortissement (27) sont en outre prévus dans l'espace compris entre ces faces (2, 3).

3 - Dispositif élastique de calage ou de support selon la revendication 1 ou la revendication 2, caractérisé en ce que des moyens (a, 14, 27) sont prévus pour limiter la distance maximale (H, H') d'écartement entre ces faces (2, 3).

4 - Dispositif selon l'une des revendications 1 à 3, caractérisé en ce qu'il comprend des moyens de pré-tension (24, 25) aptes à limiter, à une valeur inférieure à sa valeur maximale (H, H'), la distance d'écartement entre ces faces (2, 3).

5 - Dispositif selon l'une des revendications 1 à 4, caractérisé en ce qu'il comporte des charnières d'articulation (15, 18, 19) des deux plaques rigides (12, 13) qui constituent un organe de guidage (9), et en ce que ces charnières sont des charnières à effet de ressort.

6 - Dispositif selon l'une des revendications 1 à 5, caractérisé en ce qu'il comporte un seul élément élastique (1) pour constituer une cale, cet élément (1) étant au moins partiellement entouré d'une enveloppe (33) au moins partiellement en matériau anti-dérapant.

7 - Dispositif selon la revendication 6, caractérisé en ce que cette cale est en outre recouverte au moins partiellement d'un matériau fluorescent.

8 - Dispositif selon l'une des revendications 1 à 7, caractérisé en ce qu'il comporte des moyens (26) d'accouplement entre éléments (1).

9 - Dispositif selon l'une des revendications 1 à 5 et 8, caractérisé en ce qu'il comporte un damier d'éléments élastiques (1) pour constituer un tapis ou un matelas.

10 - Dispositif selon l'une des revendications 1 à 5 et 8 ou 9, caractérisé en ce que les deux faces (2, 3) de cet élément (1) sont extérieurement au moins partiellement constituées, ou revetues, d'un matériau anti-dérapant.

Fig.1

Fig.2

Fig.3

Fig.4

EP 0 346 248 A1

Fig. 5

Fig. 6

Fig. 7

Fig. 8

Fig. 9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 315 486 (SOCIETE NOUVELLE DES ATELIERS DE VENISSIEUX) * figures 1,2; page 6, ligne 12 - page 8, ligne 5; page 11, lignes 9-17 * --- | 1,2,4,6 | B 60 P 7/16 |
| A | PATENT ABSTRACTS OF JAPAN vol. 10, no. 378 (M-546)(2435), 17 decembre 1986; & JP - A - 61 171674 (MITSURU MURAKAMI) 02.08.1986 ----- | 1 | |

**DOMAINES TECHNIQUES RECHERCHES (Int. Cl.4)**

B 60 P
B 60 R

Le présent rapport a été établi pour toutes les revendications

| Lieu de la recherche | Date d'achèvement de la recherche | Examinateur |
|---|---|---|
| BERLIN | 04-09-1989 | STANDRING M A |

EPO FORM 1503 03.82 (P0402)